# EUROPÄISCHE PATENTSCHRIFT

(11) **EP 2 802 921 B1**
(45) Veröffentlichungstag und Bekanntmachung des Hinweises auf die Patenterteilung: **09.03.2016**
(21) Anmeldenummer: 12806018.3
(22) Anmeldetag: 13.12.2012
(51) Int. Cl.: G02B 21/16, G02B 21/36, G02B 27/58, G01N 21/64

(54) **MIKROSKOP UND VERFAHREN FÜR DIE HOCHAUFLÖSENDE 3-D FLUORESZENZMIKROSKOPIE**
MICROSCOPE AND METHOD FOR HIGH-RESOLUTION 3-D FLUORESCENT MICROSCOPY
MICROSCOPE ET PROCÉDÉ DE MICROSCOPIE À FLUORESCENCE 3D HAUTE RÉSOLUTION

(30) Priorität: 11.01.2012 DE 102012200344
(43) Veröffentlichungstag der Anmeldung: 19.11.2014
(73) Patentinhaber: Carl Zeiss Microscopy GmbH, 07745 Jena (DE)
(72) Erfinder: KALKBRENNER, Thomas, 07745 Jena (DE); WOLLESCHENSKY, Ralf, 07743 Jena (DE)
(74) Vertreter: Hampe, Holger
(86) Internationale Anmeldenummer: PCT/EP2012/075464
(87) Internationale Veröffentlichungsnummer: WO 2013/104483

(56) Entgegenhaltungen:
- DE-A1-102009 060 490
- MATTHEW D. LEW ET AL: "<title>In vivo three-dimensional superresolution fluorescence tracking using a double-helix point spread function</title>", PROCEEDINGS OF SPIE, Bd. 7571, 11. Februar 2010 (2010-02-11), Seite 75710Z, XP055052798, ISSN: 0277-786X, DOI: 10.1117/12.842608
- DAVID BADDELEY ET AL: "4D Super-Resolution Microscopy with Conventional Fluorophores and Single Wavelength Excitation in Optically Thick Cells and Tissues", PLOS ONE, Bd. 6, Nr. 5, 1. Januar 2011 (2011-01-01), Seite e20645, XP055052829, ISSN: 1932-6203, DOI: 10.1371/journal.pone.0020645
- C. BOURGENOT ET AL: "<title>Adaptive optics for wide-field microscopy</title>", PROCEEDINGS OF SPIE, Bd. 7904, 10. Februar 2011 (2011-02-10), Seiten 790414-790414-7, XP055052830, ISSN: 0277-786X, DOI: 10.1117/12.873857
- IZEDDIN: "PSF shaping using adaptive optics for three-dimensional single-molecule super-resolution imaging and tracking", OPTICS EXPRESS, Bd. 20, Nr. 5, 13. Februar 2012 (2012-02-13), Seite 4957, XP055052832, ISSN: 1094-4087, DOI: 10.1364/OE.20.004957

## Beschreibung

Die Erfindung bezieht sich auf ein Verfahren zur hochauflösenden 3D-Fluoreszenzmikroskopie, wobei in einer Probe wiederholt Fluoreszenzemitter zur Abgabe von Fluoreszenzstrahlung angeregt und von der Probe mit einem Mikroskop, das einen Abbildungsstrahlengang mit einer optischen Auflösung und eine Fokalebene aufweist, Einzelbilder erzeugt werden, wobei die Fluoreszenzemitter derart zur Abgabe von Fluoreszenzstrahlung angeregt werden, dass zumindest eine Teilmenge der Fluoreszenzemitter in jedem Einzelbild derart isoliert ist, so dass die Bilder dieser Fluoreszenzemitter im Rahmen der optische Auflösung in den Einzelbildern trennbar sind, in den erzeugten Einzelbildern aus den Bildern der isolierten Fluoreszenzemitter die Lagen dieser Fluoreszenzemitter mit einer über eine optische Auflösung hinaus gehenden Ortsgenauigkeit lokalisiert werden und daraus ein hochaufgelöstes Gesamtbild erzeugt wird, im Abbildungsstrahlengang des Mikroskops ein astigmatisches Element verwendet wird, das bei der Erzeugung der Einzelbilder einen Astigmatismus bewirkt, wodurch astigmatismusbehaftete Einzelbilder aufgenommen werden, in denen die Bilder über der Fokalebene liegender Fluoreszenzemitter durch Verzerrung in eine erste Richtung eine erste Rotationsasymmetrie und die Bilder unter der Fokalebene liegender Fluoreszenzemitter durch eine Verzerrung in eine zweite Richtung eine zweite Rotationsasymmetrie haben, wobei aus der Rotationsasymmetrie eine Tiefenlagenangabe für die Fluoreszenzemitter abgeleitet wird.

Die Erfindung bezieht sich weiter auf ein Fluoreszenzmikroskop zum dreidimensionalen Abbilden einer Probe mit einer über eine optische Auflösung gesteigerten Ortsauflösung, das aufweist: eine Beleuchtungseinrichtung, die dazu ausgebildet ist, in der Probe wiederholt Fluoreszenzemitter zur Abgabe von Fluoreszenzstrahlung anzuregen, eine einen Abbildungsstrahlengang mit der optischen Auflösung umfassende Abbildungseinrichtung, die dazu ausgebildet ist, von der Probe mit der optischen Auflösung Einzelbilder zu erzeugen, eine Steuereinrichtung, die dazu ausgebildet ist, die Beleuchtungseinrichtung und die Abbildungseinrichtung so anzusteuern, dass von der Probe mehrere Einzelbilder erzeugt werden, wobei die Fluoreszenzemitter derart zur Abgabe von Fluoreszenzstrahlung angeregt sind, dass zumindest ein Teilmenge der Fluoreszenzemitter in jedem Einzelbild in jedem Einzelbild derart isoliert ist, dass die Bilder dieser Fluoreszenzemitter im Rahmen der optischen Auflösung in den Einzelbildern trennbar sind, wobei die Steuereinrichtung dazu ausgebildet ist, in den erzeugten Einzelbildern die Lagen der isoliert fluoreszierenden Fluoreszenzemitter mit einer über eine optische Auflösung hinaus gehenden Ortsgenauigkeit zu lokalisieren und daraus ein hochaufgelöstes Gesamtbild zu erzeugen, die Abbildungseinrichtung (5, 10, K1) ein astigmatisches Element aufweist, das bei der Erzeugung der Einzelbilder einen Astigmatismus bewirkt, wodurch astigmatismusbehaftete Einzelbilder aufgenommen sind, in denen die Bilder über der Fokalebene liegender Fluoreszenzemitter durch Verzerrung in eine erste Richtung eine erste Rotationsasymmetrie und die Bilder unter der Fokalebene liegender Fluoreszenzemitter durch eine Verzerrung in eine zweite Richtung eine zweite Rotationsasymmetrie haben, wobei die Steuereinrichtung dazu ausgebildet ist, aus der Rotationsasymmetrie eine Tiefenlagenangabe für die Fluoreszenzemitter abzuleiten.

Im Stand der Technik sind verschiedene Verfahren zur Überwindung der Beugungsgrenze in der Mikroskopie entwickelt worden. Aus der WO 2006/127692 oder der DE 102006021317 A1 ist ein mit PALM abgekürztes Verfahren (photo activated light microscopy) bekannt, das eine Markierungssubstanz zur Abbildung einer Probe verwendet, welche z.B. mittels optischer Strahlung aktiviert werden kann. Nur im aktivierten Zustand kann die Markierungssubstanz bestimmte Fluoreszenzstrahlung abgeben. Nicht aktivierte Moleküle der Markierungssubstanz senden auch nach Einstrahlung von Anregungsstrahlung keine oder zumindest keine merkliche Fluoreszenzstrahlung ab. Man bezeichnet deshalb die Aktivierungsstrahlung allgemein als Umschaltsignal. Im PALM-Verfahren wird nun das Umschaltsignal so aufgebracht, dass zumindest ein gewisser Anteil der aktivierten Markierungsmoleküle von benachbarten aktivierten Molekülen so beabstandet ist, dass diese Markierungsmoleküle gemessen an der optischen Auflösung der Mikroskopie getrennt oder nachträglich durch Bildverarbeitungsverfahren trennbar sind. Man spricht davon, dass eine Teilmenge der Fluoreszenzemitter isoliert wird. Nach Aufnahme der Fluoreszenzstrahlung wird für diese isolierten Emitter dann das Zentrum deren auflösungsbegrenzt bedingter Strahlungsverteilung ermittelt. Daraus kann man rechnerisch die Lage der Moleküle mit höherer Genauigkeit bestimmen, als es die optische Auflösung eigentlich zulässt. Dieser Vorgang wird als Lokalisierung bezeichnet. Die gesteigerte Auflösung durch rechnerische Schwerpunktbestimmung der Beugungsverteilung wird in der englischen Fachliteratur auch als "super resolution" bezeichnet. Sie erfordert, dass in der Probe zumindest eine Teilmenge der aktivierten Markierungsmoleküle mit der optischen Auflösung unterscheidbar, also isoliert sind. Dann kann ihre Ortslage mit höherer Genauigkeit bestimmt werden, sie können lokalisiert werden.

Zum Isolieren einzelner Markierungsmoleküle nutzt das PALM-Prinzip statistische Effekte aus. Bei einem Markierungsmolekül, das nach Empfang des Umschaltsignals gegebener Intensität zur Fluoreszenzstrahlung anregbar ist, kann durch Einstellen der Intensität des Umschaltsignals dafür gesorgt werden, dass die Wahrscheinlichkeit in einem gegebenen Flächenbereich der Probe vorhandene Markierungsmoleküle zu aktivieren, so gering ist, dass es ausreichend Teilbereiche gibt, in denen innerhalb der optischen Auflösung nur unterscheidbare Markierungsmoleküle Fluoreszenzstrahlung emittieren.

Das PALM-Prinzip wurde hinsichtlich der Aktivierung der zu erfassenden Moleküle weitergebildet. So ist beispielsweise bei Molekülen, die einen langlebigen nicht fluoreszierenden und einen kurzlebigen fluoreszierenden Zustand aufweisen, ein separates Aktivieren mit spektral von der Anregungsstrahlung sich unterscheidender Aktivierungsstrahlung gar nicht erforderlich. Vielmehr wird die Probe zuerst mit Beleuchtungsstrahlung hoher Intensität so aktiviert, dass der weit überwiegende Anteil der Moleküle in den nicht fluoreszenzfähigen langlebigem Zustand (z. B. einen Triplet-Zustand) gebracht werden. Die verbleibenden, dann noch fluoreszierenden Moleküle sind dadurch hinsichtlich der optischen Auflösung isoliert.

Es sei auch noch angemerkt, dass das PALM-Prinzip in der Fachliteratur mittlerweile auch andere Abkürzungen erhalten hat, wie beispielsweise STORM. In dieser Beschreibung wird die Abkürzung PALM für alle Mikroskopieaufnahmen verwendet, die eine Ortsauflösung über die optische Auflösung der verwendeten Apparatur hinaus erreichen, indem Fluoreszenzmoleküle zuerst isoliert und dann lokalisiert werden. Das PALM-Verfahren hat den Vorteil, dass für die Beleuchtung keine hohe Ortsauflösung benötigt wird. Eine einfache Weitfeldbeleuchtung ist möglich.

Das PALM-Prinzip erfordert es, dass viele Einzelbilder der Probe aufgenommen werden, die jeweils Teilmengen aus isolierten Molekülen enthalten. Um die Probe zur Gänze abzubilden, muss die Menge aller Einzelbilder sicherstellen, dass möglichst alle Moleküle mindest einmal in einer Teilmenge enthalten waren. Das PALM-Verfahren benötigt deshalb regelmäßig eine Vielzahl von Einzelbildern, was eine gewisse Dauer für die Aufnahme eines Gesamtbildes bedingt. Damit ist ein erheblicher Rechenaufwand verbunden, da in jedem Einzelbild rechnerisch eine Vielzahl von Molekülen lokalisiert werden muss. Es fallen große Datenmengen an.

Diese Lokalisierungsgenauigkeit wird durch die Lokalisierung in Einzelbildern lediglich lateral erreicht, also in einer Ebene, die der Bildebene der Kamera zugeordnet ist. Die Verfahren sind also in dieser Hinsicht auf eine zweidimensionale Probenanalyse beschränkt. Man kombiniert das PALM-Prinzip deshalb mit einer TIRF-Anregung, welche sicherstellt, dass nur Fluorophore aus einer dünnen Schicht der Probe emittieren.

Zur Lokalisierung lumineszierender Markierungsmoleküle in der dritten Raumrichtung, welche bezogen auf die Abbildung der Probe die Tiefenrichtung ist, sind aus dem Stand der Technik ebenfalls Ansätze bekannt. Unter "Tiefenrichtung" wird dabei die Richtung längs des Lichteinfalls, also längs der optischen Achse verstanden.

Die Veröffentlichung Pavani et al., PNAS 106, Seite 2995, 2009, schlägt vor, die Punktbildverwaschungsfunktion durch einen räumlichen Phasenmodulator in der Abbildung zu einer Doppelhelixstruktur zu modifizieren. Die Punktbilder einzelner, lumineszierender Markierungsmoleküle werden dann zu Doppelspots, ihre Tiefenlage ist in der Winkelorientierung der gemeinsamen Achse der Doppelspots kodiert.

Gemäß der Veröffentlichung von Shtengel et al., PNAS 106, Seite 3125, 2009, werden von den lumineszierenden Markierungsmolekülen emittierten Photonen mit sich selbst zur Interferenz gebracht. Dazu werden zwei in 4π-Konfiguration montierte Objektive verwendet, welche die lumineszierenden Markierungsmoleküle gleichzeitig beobachten. Die derart gewonnenen Teilstrahlengänge werden mittels eines speziellen Drei-Wege-Strahlteilers zur Interferenz gebracht. Jedes der damit erhaltenen Dreipunktbilder wird mit einer Kamera detektiert. Die Intensitätsverhältnisse der Dreipunktbilder geben Aufschluss über die Tiefenlage.

Die Publikationen Toprak et al., Nanolet. 7, Seiten 3285-3290, 2007 sowie Juette et al., Nature Methods 5, Seite 527, 2008, beschreiben einen Ansatz, bei dem ein 50/50-Strahlteiler in den Abbildungsstrahlengang eingebaut wird, der das Abbild der Probe in zwei Teilbilder aufspaltet. Diese zwei Bilder werden eigenständig detektiert. Zusätzlich wird in einem der damit erhaltenen Teilstrahlengänge eine optische Weglängendifferenz dergestalt eingeführt, dass sich aus den beiden Teilstrahlengänge zwei Objektebenen ergeben, die etwa um die halbe oder ganze optische Mindestauflösung (beispielsweise 700 nm) in z-, also Tiefenrichtung, auseinanderliegen. Die Tiefenposition von Markierungsmolekülen, die zwischen diesen beiden Ebenen liegen, ergibt sich nun durch Subtraktion der zwei Teilbilder desselben Markierungsmoleküls oder durch entsprechendes Fitten einer dreidimensionalen Punktbildverwaschungsfunktion. Diesen Ansatz verfolgt auch die DE 102009060490 A1, die weitere Nachweise zur 3D-Hochauflösung aufführt. Das Verfahren erfordert zwei hochaufgelöste Teilbilder und eine präzise Justage der Strahlengänge und Kalibriermessungen, um eine sub-pixelgenaue Überlagerung der beiden Teilbilder zu erreichen. Weiter sind die beiden Teilbilder eines Markierungsmoleküls in der Regel von unterschiedlicher Form, da sich die laterale Ausdehnung der Punktbildverwaschungsfunktion eines abbildenden Systems in Abhängigkeit von der Lage der betrachteten Objektebene ändert.

Die Publikation B. Huang et al., Science 319, Seite 810, 2008, offenbart ein Verfahren und ein Mikroskop der eingangs genannten Art. Im Abbildungsstrahlengang liegt eine schwache Zylinderlinse, die zu einer gezielten astigmatischen Verzeichnung führt. Dadurch wird das Bild des Moleküls auf der Kamera elliptisch verzerrt, sobald sich das Molekül ober- oder unterhalb der Fokalebene, also des Symmetriepunktes der Punktbildverwaschungsfunktion befindet. Aus der Orientierung und der Stärke der Verzerrung lässt sich die Information über die Tiefenlage des lumineszierenden Markierungsmoleküls gewinnen. Ein Nachteil dieses Verfahrens liegt darin, dass auch die lokale Umgebung und die Orientierung eines molekularen Dipols zu einer Verzerrung des Bildes des lumineszierenden Markierungsmoleküls führen können, die mit der Tiefenlage nichts zu tun hat. Solchen lumineszierenden Markierungsmolekülen wird dann, je nach ihrer Orientierung, ein falscher Tiefenwert zugeordnet.

Der Erfindung liegt die Aufgabe zugrunde, ein solches Verfahren dahingehend weiterzubilden, dass diese Fehler vermieden sind.

Die Aufgabe wird erfindungsgemäß gelöst durch ein Verfahren zur hochauflösenden 3D-Fluoreszenzmikroskopie, wobei a) in einer Probe wiederholt Fluoreszenzemitter zur Abgabe von Fluoreszenzstrahlung angeregt und von der Probe mit einem Mikroskop, das einen Abbildungsstrahlengang mit einer optischen Auflösung und eine Fokalebene aufweist, Einzelbilder erzeugt werden, wobei die Fluoreszenzemitter derart zur Abgabe von Fluoreszenzstrahlung angeregt werden, dass zumindest eine Teilmenge der Fluoreszenzemitter in jedem Einzelbild derart isoliert ist, so dass die Bilder dieser Fluoreszenzemitter im Rahmen der optische Auflösung in den Einzelbildern trennbar sind, b) in den erzeugten Einzelbildern aus den Bildern der isolierten Fluoreszenzemitter die Lagen dieser Fluoreszenzemitter mit einer über eine optische Auflösung hinaus gehenden Ortsgenauigkeit lokalisiert werden und daraus ein hochaufgelöstes Gesamtbild erzeugt wird, c) im Abbildungsstrahlengang des Mikroskops ein adaptiver Spiegel verwendet und dieser so eingestellt wird, dass er bei der Erzeugung zumindest einiger der Einzelbilder einen Astigmatismus bewirkt, wodurch astigmatismusbehaftete Einzelbilder aufgenommen werden, in denen die Bilder über der Fokalebene liegender Fluoreszenzemitter durch Verzerrung in eine erste Richtung eine erste Rotationsasymmetrie und die Bilder unter der Fokalebene liegender Fluoreszenzemitter durch eine Verzerrung in eine zweite Richtung eine zweite Rotationsasymmetrie haben, wobei aus der Rotationsasymmetrie eine Tiefenlagenangabe für die Fluoreszenzemitter abgeleitet wird, d) der adaptive Spiegel zusätzlich auch so eingestellt wird, dass er bei der Erzeugung zumindest einiger der Einzelbilder keinen Astigmatismus bewirkt, so dass astigmatismusfreie Einzelbilder aufgenommen werden, und e) rotationsasymmetrische Bilder von Fluoreszenzemittern in den astigmatismusfreien Einzelbildern detektiert werden und bei der Ableitung der Tiefenlagenangabe in den astigmatismusbehafteten Einzelbilder diese Fluoreszenzemitter entweder einer Tiefenlagenkorrektur unterzogen oder unterdrückt werden.

Die Aufgabe wird weiter gelöst durch ein Fluoreszenzmikroskop zum dreidimensionalen Abbilden einer Probe mit einer über eine optische Auflösung gesteigerten Ortsauflösung, das aufweist: eine Beleuchtungseinrichtung, die dazu ausgebildet ist, in der Probe wiederholt Fluoreszenzemitter zur Abgabe von Fluoreszenzstrahlung anzuregen, eine einen Abbildungsstrahlengang mit der optischen Auflösung umfassende Abbildungseinrichtung, die dazu ausgebildet ist, von der Probe mit der optischen Auflösung Einzelbilder zu erzeugen, eine Steuereinrichtung, die dazu ausgebildet ist, die Beleuchtungseinrichtung und die Abbildungseinrichtung so anzusteuern, dass von der Probe mehrere Einzelbilder erzeugt werden, wobei die Fluoreszenzemitter derart zur Abgabe von Fluoreszenzstrahlung angeregt sind, dass zumindest ein Teilmenge der Fluoreszenzemitter in jedem Einzelbild derart isoliert ist, dass die Bilder dieser Fluoreszenzemitter im Rahmen der optische Auflösung in den Einzelbildern trennbar sind, wobei die Steuereinrichtung dazu ausgebildet ist, in den erzeugten Einzelbildern die Lagen der isoliert fluoreszierenden Fluoreszenzemitter mit einer über eine optische Auflösung hinaus gehenden Ortsgenauigkeit zu lokalisieren und daraus ein hochaufgelöstes Gesamtbild zu erzeugen, die Abbildungseinrichtung einen adaptiver Spiegel aufweist, die Steuereinrichtung dazu ausgebildet ist, den adaptiver Spiegel so einzustellen wird, dass dieser bei der Erzeugung zumindest einiger der Einzelbilder einen Astigmatismus bewirkt, wodurch astigmatismusbehaftete Einzelbilder aufgenommen sind, in denen die Bilder über der Fokalebene liegender Fluoreszenzemitter durch Verzerrung in eine erste Richtung eine erste Rotationsasymmetrie und die Bilder unter der Fokalebene liegender Fluoreszenzemitter durch eine Verzerrung in eine zweite Richtung eine zweite Rotationsasymmetrie haben, wobei die Steuereinrichtung dazu ausgebildet ist, aus der Rotationsasymmetrie eine Tiefenlagenangabe für die Fluoreszenzemitter abzuleiten, die Steuereinrichtung dazu ausgebildet ist, den adaptiver Spiegel zusätzlich auch so einzustellen, dass dieser bei der Erzeugung zumindest einiger der Einzelbilder keinen Astigmatismus bewirkt, so dass astigmatismusfreie Einzelbilder aufgenommen sind, und die Steuereinrichtung dazu ausgebildet ist, in den astigmatismusfreien Einzelbildern rotationsasymmetrische Bilder von Fluoreszenzemittern zu detektieren und bei der Ableitung der Tiefenlagenangabe in den astigmatismusbehafteten Einzelbilder diese Fluoreszenzemitter entweder einer Tiefenlagenkorrektur zu unterziehen oder zu unterdrücken.

Als wesentliches Element setzt die Erfindung zur Weiterbildung des von Huang et al. beschriebenen, astigmatismusbasierten Tiefenauflösungskonzeptes einen adaptiven Spiegel ein. Hierunter wird ein Spiegel verstanden, dessen Spiegelfläche in ihrer Krümmung verändert werden kann. Solche Spiegel sind per se im Stand der Technik bekannt. Mit dem adaptiven Spiegel wurden nun sowohl die astigmatismusbehafteten Einzelbilder, aus denen die Tiefeninformation gewonnen wird, als auch zusätzlich astigmatismusfreie Einzelbilder erzeugt, die zur Korrektur der Tiefenangabe herangezogen werden. Ein einen Dipol realisierender Fluoreszenzemitter hat bereits von Haus aus ein verzerrtes Punkt-Bild und würde im astigmatismusbehafteten Einzelbild irrtümlich einer falschen Tiefenposition zugeordnet. Nun wird dieser Emitter bei der Tiefenanalyse unterdrückt oder seine Punkt-Bildverzerrung, die im astigmatismusfreien Einzelbild sichtbar wird, wird als Ausgangspunkt für die Gewinnung der Tiefenangabe verwendet. Dies kann dadurch geschehen, indem die aus dem astigmatismusfreien Einzelbild bekannte verzerrte Grundform des Punkt-Bildes im astigmatismusbehafteten Einzelbild als Nulllagenangabe verwendet wird. Die astigmatismusfreien Einzelbilder liefern dadurch die Referenzform der Bilder der Fluoreszenzemitter für die Fokalebene (Nulllage der Tiefenangabe).

Die erfindungsgemäß erreichte Fehlerkorrektur hinsichtlich Fluoreszenzemittern, die per se, d. h. unabhängig von einem zusätzlich zur Tiefenanalyse eingeführten Astigmatismus, ein nicht rotationssymmetrisches Punkt-Bild haben, erlaubt es weiter, solche Fluoreszenzemitter in einem Nachführprozess (sogenanntes tracking) zuverlässig zu verfolgen, wenn dynamische Prozesse aufgelöst werden sollen.

Mittels des adaptiven Spiegels kann der Arbeitsbereich der Tiefenauflösung durch die Einstellung des Grades des Astigmatismus an unterschiedliche Anforderungen bzw. den Einsatz unterschiedlicher Objektive angepasst werden. Auch kann für bestimmte Anwendungen völlig unproblematisch die Tiefenauflösung ausgeschaltet werden, indem der adaptive Spiegel so eingestellt wird, dass er keinen Astigmatismus begründet. Die Verwendung eines Spiegels hat darüber hinaus den Vorteil, dass eine etwaige chromatische Abberation, wie sie bei einer Zylinderlinse auftreten könnte, vermieden ist.

Als adaptiver Spiegel kommen insbesondere Spiegel mit segmentierter Oberfläche oder kontinuierliche, sogenannte Membranspiegel in Frage, wie sie dem Fachmann bekannt sind, beispielsweise aus der Veröffentlichung www.bostonmicromachines.com/light-modulator.htm oder www.imagine-optic.com. Ein Überblick über adaptive Spiegel findet sich weiter in http://en.wikipedia.org/wiki/Deformable_mirror.

Bevorzugt wird der adaptive Spiegel mit einem Wellenfrontsensor kombiniert, der die Wellenfront der Strahlung, welche am Spiegel reflektiert wurde, erfasst. Damit werden optional Abbildungsfehler des Mikroskops oder Abbildungsfehler, die durch die Probe bewirkt werden korrigiert. Darüber hinaus ist eine Verschiebung der Fokusebene innerhalb gewisser Grenzen unproblematisch möglich, ohne dass das Mikroskopobjektiv verstellt werden müsste. Mechanische Störungen der Probe durch Bewegungen des Mikroskopobjektives können dadurch vermieden werden.

Die Erzeugung der astigmatismusfreien Einzelbilder kann intermittierend zwischen der Erzeugung der astigmatismusbehafteten Einzelbilder erfolgen. Der adaptive Spiegel wird dann zwischen einer Oberflächenform, die bewusst einen Astigmatismus einführt, und einer Oberflächenform, die keinen Astigmatismus bewirkt, umgeschaltet. Der Vorteil dieses Vorgehens liegt darin, dass die unterschiedlichen Einzelbilder automatisch perfekt zueinander justiert sind, da sie von ein- und derselben Kamera aufgenommen werden.

Auch kann das astigmatismusfreie Einzelbild, das ja zur Tiefenkorrektur eingesetzt wird, abhängig von Anwendungsbedingungen seltener erzeugt werden, beispielsweise wenn eine Probe verwendet wird, für die dipolbedingte Verzerrungen von Bildern der Fluoreszenzemitter zu erwarten bzw. nicht zu erwarten sind.

Für schnell ablaufende Prozesse, bei denen eine schnelle Bildaufnahme wünschenswert ist, kann alternativ zum intermittierenden astigmatismusfreien Betrieb der adaptive Spiegel im Abbildungsstrahlengang als Strahlteiler eingesetzt werden, so dass er zwei lateral getrennte Einzelbilder bereitstellt. Diese können beispielsweise auf unterschiedliche Teilbereiche ein und derselben Kamera abgebildet werden. Dadurch ist es möglich, das astigmatismusfreie Einzelbild und das astigmatismusbehaftete Einzelbild gleichzeitig, z. B. nebeneinander auf das Bildfeld einer Kamera abzubilden. Der Justieraufwand zur genauen Zuordnung der genauen Einzelbilder bleibt dabei sehr überschaubar, da lediglich der einstellbare adaptive Spiegel die Strahlteilung bewirkt. Die gewünschte subpixelgenaue Einstellung kann durch geeignete Ansteuerung des adaptiven Spiegels einfach und aufwandsgering hergestellt werden.

Verwendet man eine Kamera mit zwei Bildfeldbereichen erreicht man, dass beide Einzelbilder simultan zur Verfügung stehen.

Der Grad des Astigmatismus, der eingeführt wird, beeinflusst die Verzerrung der Punkt-Bilder der Fluoreszenzemitter. Ein starker Astigmatismus führt zu einer starken Verzerrung, d.h. Fluoreszenzemitter, die bereits vergleichsweise gering über bzw. unter der Fokalebene liegen, werden vergleichsweise stark verzerrt. Eine hohe Tiefenauflösung ist das Ergebnis. Stellt man hingegen den Astigmatismus schwächer ein, wird die selbe Verzerrung der Punkt-Bilder erst für größere Abstände zur Fokalebene erreicht. Dadurch ist der erfasste Tiefenbereich größer. Durch geeignete Ansteuerung des adaptiven Spiegels lässt sich somit einfach zwischen den an und für sich widerstrebenden Anforderungen Tiefenauflösung und erfasster Tiefenbereich wechseln.

Unter dem Bild eines Fluoreszenzemitters ist dessen in der Regel beugungsbegrenztes Punkt-Bild gemeint.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen. Soweit in dieser Beschreibung Verfahrensmerkmale erwähnt sind, werden sie im Betrieb des Mikroskops durch ein entsprechend ausgebildetes Steuergerät realisiert. Analog gilt eine Offenbarung von funktionellen Merkmalen des Steuergerätes auch als Beschreibung entsprechender Verfahrensmerkmale, z.B. Schritte.

Nachfolgend wird die Erfindung beispielsweise anhand der beigefügten Zeichnungen, die auch erfindungswesentliche Merkmale offenbaren, noch näher erläutert. Es zeigen:
- Fig. 1: eine Schemadarstellung eines Mikroskops zur tiefenaufgelösten und hochaufgelösten Fluoreszenzmikroskopie,
- Fig. 2: eine Schemadarstellung auf verschiedene Punkt-Bilder eines Fluoreszenzemitters zur Erläuterung der Tiefenauflösung,
- Fig. 3 und 4: Einzelbilder, die beim Betrieb des Mikroskops der Fig. 1 zur Tiefenauflösung erzeugt werden, und
- Fig. 5: eine Schemadarstellung einer Abwandlung des Abbildungsstrahlengangs des Mikroskops der Fig. 1.

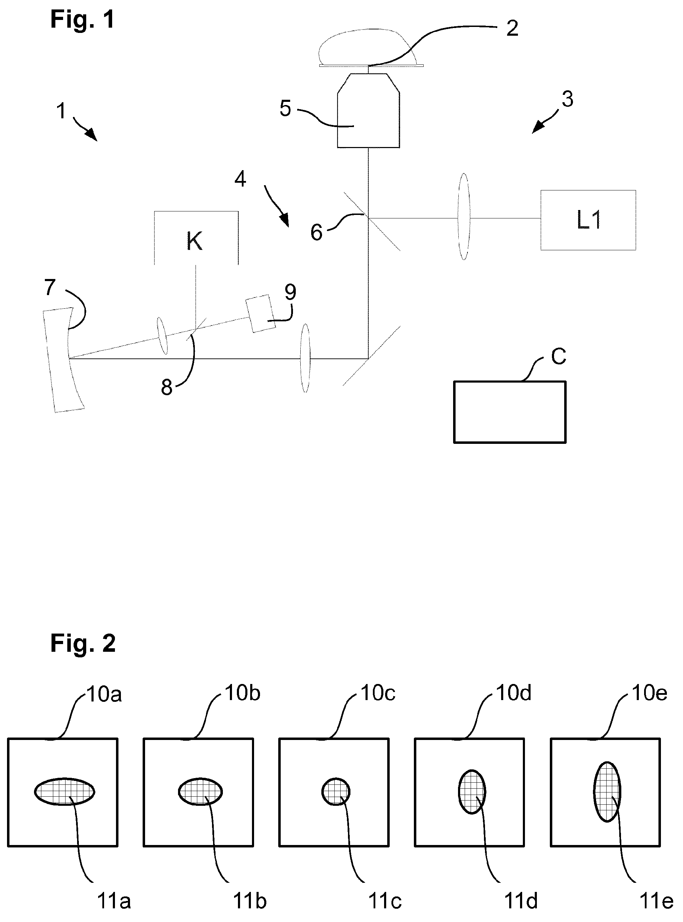

Fig. 1 zeigt schematisch ein Fluoreszenzmikroskop 1, dessen Betrieb von einem Steuergerät C gesteuert wird. Es ist über nicht gezeigte Verbindungen mit den Elementen bzw. Bauteilen des Mikroskops 1 verbunden. Das Mikroskop 1 ist dazu eingerichtet, Fluoreszenzmikroskopie nach dem PALM-Prinzip etc. auszuführen. Es umfasst einen Beleuchtungsstrahlengang 3, sowie einen Abbildungsstrahlengang 4, die über ein gemeinsames Objektiv 5 eine Probe 2 beleuchten und die fluoreszierende Probe abbilden. Der Beleuchtungsstrahlengang 3 ist mit dem Abbildungsstrahlengang 4 über einen in der Regel dichroitisch ausgestalteten Strahlteiler 6 zusammengefasst, so dass sowohl der Beleuchtungsstrahlung aus dem Beleuchtungsstrahlengang 3 durch das Objektiv 5 zur Probe fällt, als auch die Abbildung der Probe durch das Objektiv 5 erfolgt. Der Beleuchtungsstrahlengang 3 kann mehrere Spektralkanäle aufweisen, in der Darstellung der Fig. 1 ist exemplarisch nur eine Laserquelle L1 dargestellt. Der Beleuchtungsstrahlengang beleuchtet die Probe so, dass Fluoreszenzstrahlung in der Probe 2 angeregt wird. Je nach Ausgestaltung des PALM-Prinzips kann zusätzlich noch eine Anregungsstrahlenquelle in den Beleuchtungsstrahlengang 3 eingekoppelt werden.

Die Probe 2 gibt Fluoreszenzstrahlung ab, und im Abbildungsstrahlengang 4 wird das Bild der fluoreszierenden Probe 2 auf eine hochauflösende Kamera K geleitet. Die Auflösung von Objektiv 5, Abbildungsstrahlengang 4 und Kamera K ist so gewählt, dass ein beugungsbegrenztes Punkt-Bild eines einzelnen Fluoreszenzemitters auf mehrere Pixel fällt. Dies ermöglicht das für das eingangs geschilderte PALM-Prinzip erforderliche Lokalisieren eines Fluoreszenzemitters mit einer lateralen Ortsgenauigkeit, welche über die optische Auflösung von Mikroskop 5 und Abbildungsstrahlengang 4 hinausgeht.

Natürlich kann das Mikroskop 1 auch mit mehreren Farbkanälen ausgestaltet werden. Dann sind im Abbildungsstrahlengang 4 mehrere Kameras vorgesehen, die über geeignete Strahlteiler in den Strahlengang gekoppelt sind.

Der Abbildungsstrahlengang 4 umfasst neben nicht näher bezeichneten optischen Elementen, die für das Mikroskop 1 nicht weiter charakteristisch und im übrigen fachüblich sind, einen adaptiven Spiegel 7, dessen Spiegelfläche gekrümmt ist, und der Teil des Abbildungsstrahlenganges 4 ist. Er bündelt die Strahlung von der fluoreszierenden Probe 2 in Richtung auf die Kamera K.

Der adaptive Spiegel wird durch das Steuergerät C angesteuert, das die Geometrie der Spiegelfläche einstellt. Ein über einen Strahlteiler in den Abbildungsstrahlengang 4 geschalteter Wellenfrontsensor 9 dient dem Steuergerät C dabei dazu, die aktuelle Spiegelwirkung möglichst genau erfassen zu können. Er steigert damit die Genauigkeit, ist aber nicht zwingend erforderlich.

Das Steuergerät C steuert das Mikroskop 1 so an, dass das PALM-Prinzip ausgeführt wird. Die Probe 2 wird also vom Beleuchtungsstrahlengang 2 so beleuchtet, dass Fluoreszenzemitter in der Probe 2 isoliert sind, d. h. innerhalb der optischen Auflösung getrennt werden können. Es wird eine Vielzahl an Einzelbildern aufgenommen, die jeweils unterschiedliche Teilmengen der Fluoreszenzemitter in der Probe 2 isoliert beinhalten. In den Einzelbildern wird dann mittels bekannter mathematischer Algorithmen vom Steuergerät C für jeden isolierten Fluoreszenzemitter dessen Lage hochgenau bestimmt, so dass eine über die optische Auflösung der Abbildung hinausgehende Ortsgenauigkeit erreicht wird. Dies wird in der Literatur als sogenannte Hochauflösung oder super resolution bezeichnet.

Wie in Fig. 1 schematisch dargestellt ist, umfasst die Probe 2 ein Volumen, das sich senkrecht der Einfallsrichtung der Beleuchtungsstrahlung bzw. senkrecht der Abbildung erstreckt. Um nun eine Tiefenangabe für isolierte Fluoreszenzemitter ableiten zu können, stellt das Steuergerät C den adaptiven Spiegel 7 so ein, dass dieser einen leichten Astigmatismus bewirkt. Die Krümmung der Fläche des Spiegels 7 ist also kein Rotationsparaboloid mehr, sondern hat in zwei senkrecht zueinander liegenden Schnittebenen unterschiedliche Parabelform. Dadurch wird erreicht, dass lediglich exakt in der Fokusebene der optischen Abbildung liegende Fluoreszenzemitter ein durch diesen Astigmatismus nicht verzerrtes Beugungsscheibchen aufweisen. Fluoreszenzemitter, die oberhalb der Fokalebene liegen, sind in einer erste Richtung elliptisch verzerrt, Fluoreszenzemitter, die unterhalb der Fokalebene liegen, in eine senkrecht dazu gelegene, zweite Richtung.

Dies zeigt Fig. 2, in der fünf Ausschnitte 10a-10e von Einzelbildern dargestellt sind. Der Ausschnitt 10c betrifft einen Fluoreszenzemitter, der exakt in der Fokalebene liegt. Wie zu sehen ist, ist sein Bild 11c kreisförmig. Die Bilder 11b und 11a von Fluoreszenzemittern, die oberhalb der Fokalebene liegen, sind elliptisch verzerrt, in der schematischen Darstellung der Fig. 2 horizontal. Der Grad der Verzerrung nimmt zu, je weiter der Fluoreszenzemitter von der Fokalebene entfernt ist. Fluoreszenzemitter, die sich hingegen unterhalb der Fokalebene befinden, sind in eine dazu gelegene senkrechte Richtung verzerrt, wie die Bilder 11 d und 11e zeigen. Auch hier nimmt der Grad der Verzerrung mit dem Abstand von der Fokalebene zu.

In den erzeugten Einzelbildern bewirkt der Astigmatismus des adaptiven Spiegels 7 somit eine Rotationsasymmetrie, die hinsichtlich ihres Grades vom Abstand zur Fokalebene abhängt und hinsichtlich ihrer Richtung davon, ob sich der Fluoreszenzemitter über oder unter der Fokalebene befindet.

Das Steuergerät 10 nutzt nun die bewusst eingeführte Verzeichnung dazu, um für jeden isolierten Fluoreszenzemitter dessen Tiefenlage zu erfassen. Dazu wertet das Steuergerät C den Grad der Verzeichnung sowie die Richtung der Verzeichnung aus.

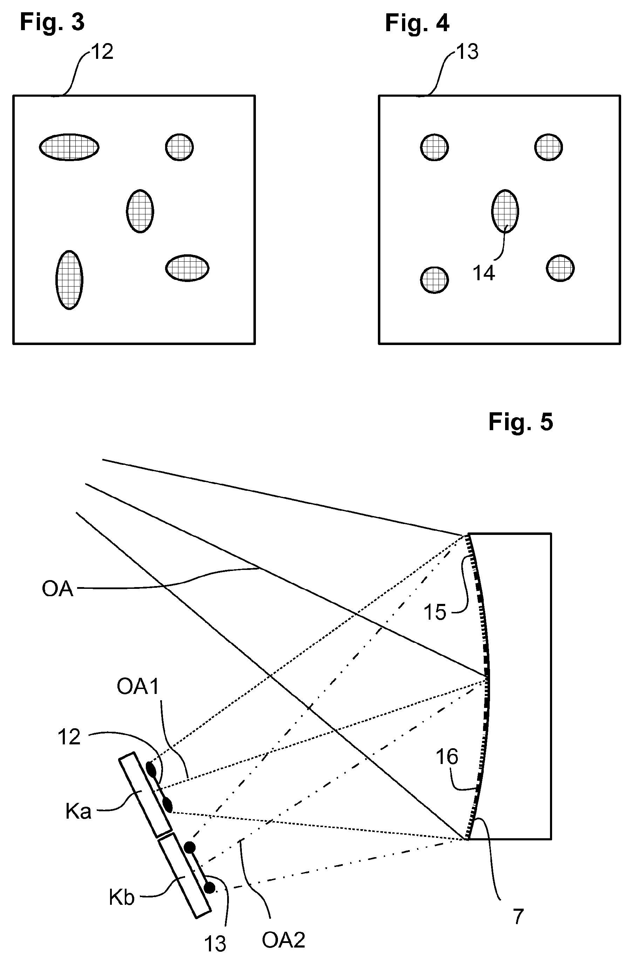

Fig. 3 zeigt exemplarisch ein Einzelbild 12, das aufgrund der entsprechenden Einstellung des adaptiven Spiegels 7 mit einem Astigmatismus behaftet ist. Wie zu sehen ist, kann aus Richtung und Grad der Rotationsasymmetrie einfach die Tiefenlage ermittelt werden, wenn der vom adaptiven Spiegel 7 bewirkte Astigmatismus berücksichtigt wird. Dies kann beispielsweise durch entsprechende Rechnungen oder besonders einfach durch eine Kalibrierung an einer Probe mit bekannter Tiefenstruktur erfolgen.

Wie bereits im allgemeinen Teil der Beschreibung erwähnt, hängt der Grad der Verzeichnung natürlich vom Grad des eingestellten Astigmatismus ab. Durch geeignete Variation der Ansteuerung des adaptiven Spiegels 7 können folglich der erfasste Tiefenbereich und die Tiefeneinlösung bequem eingestellt werden, wobei diese beiden Größen sich gegenläufig zueinander verhalten.

Fluorophore, die als Dipole ausgebildet sind, können nun bei einer Verkippung der Dipole zur optischen Achse auch in der Fokusebene ein rotationsasymmetrisches, beugungsbegrenztes Punkt-Bild haben. Würde das Steuergerät C die Bilder solcher Fluorophore hinsichtlich einer Rotationsasymmetrie auswerten, ergäbe sich eine falsche Tiefenlagenangabe.

Um eine Fehlauswertung von Fluoreszenzemittern, die per se ein nicht-rotationssymmetrisches Punkt-Bild zeigen, zu vermeiden, bewirkt das Steuergerät C intermittierend am adaptiven Spiegel 7 eine Einstellung, die keinen Astigmatismus in den Abbildungsstrahlengang 4 einbringt. Dann erhält man ein Einzelbild 13, wie es in Fig. 4 dargestellt ist. Hier erscheinen alle Fluoreszenzemitter, die per se ein rotationssymmetrisches Punkt-Bild haben, auch als kreisförmige Beugungsscheibchen. Ein Fluoreszenzemitter, der jedoch beispielsweise aufgrund des erläuterten Dipol-Effektes oder lokaler Störungen, ein nicht-rotationssymmetrisches Punkt-Bild 14 hat, ist im astigmatismusfreien Einzelbild 13 durch ein nicht-rotationssymmetrisches Beugungsscheibchen erkennbar.

Das Steuergerät C nimmt nun dieses Punkt-Bild 14 als Ausgangspunkt für die Ermittlung der Verzerrung zur Tiefenlagenauswertung.

Dabei ist es sowohl möglich, dass im astigmatismusfreien Einzelbild 13 diejenigen Fluoreszenzemitter gefiltert werden, deren Bilder gewisse Anforderungen an Rotationssymmetrie nicht erfüllen, und dass für diese Fluoreszenzemitter bzw. deren Bilder eine geeignete Korrektur bei der Tiefenlagenermittlung durchgeführt wird oder diese Fluoreszenzemitter hinsichtlich der Tiefenlagenauswertung unterdrückt werden. Gleichermaßen kann auch für jeden Fluoreszenzemitter das im nicht-beugungsbehafteten Einzelbild erzeugte Punkt-Bild hinsichtlich der Geometrie ausgewertet werden und diese Geometrie als Bezugspunkt für die Fokuslage (entsprechend der Tiefenlage z = 0) verwendet werden.

Vorgehend wurde beschrieben, dass das Steuergerät C intermittierend den adaptiven Spiegel 7 zwischen einen Astigmatismus einführenden Zustand und einem Zustand, in dem kein zusätzlicher Astigmatismus in den Abbildungsstrahlengang 4 eingebracht wird, umgeschaltet wird. Die Einzelbilder 12 und 13 werden damit intermittierend aufgenommen. Dies hat den Vorteil, dass die Einzelbilder genau zueinander justiert sind und der volle Bildbereich der Kamera K ausgenutzt werden kann.

Fig. 5 zeigt schematisch eine Abwandlung des Abbildungsstrahlenganges 4 bezüglich des adaptiven Spiegels 7 und der Kamera K, bei der adaptive Spiegel 7 als Strahlteiler wirkt, der das beugungsbehaftete Einzelbild 12 neben dem beugungsbehafteten Bild 13 auf zwei Bildbereiche Ka und Kb der Kamera (oder zwei eigenständige Kameras) abbildet. Weitere abbildende Elemente wie Linsen etc. können dabei verwendet werden, sind in der Darstellung der Fig. 5 der besseren Übersichtlichkeit halber jedoch nicht eingetragen. Der adaptive Spiegel 7 wird beispielsweise so eingestellt, dass er Spiegelflächensegmente 15 aufweist, welche die optische Achse OA in eine erste Richtung ablenken. Dazu verschachtelt liegende Spiegelflächensegmente 16 lenken die optische Achse OA in eine zweite Richtung. Dabei ist die erste Richtung eine optische Achse OA1, die dem Kamerabildbereich Ka zugeordnet ist, und die zweite Richtung entspricht einer optischen Achse OA2, welche dem Kamerabildbereich Kb zugeordnet ist. Die entsprechenden Randstrahlen für die Abbildung durch die ersten Spiegelflächensegmente 15 ist dabei wie die optische Achse OA1 gepunktet in Fig. 5 eingetragen, die Randstrahlen und die optische Achse OA2, welche durch die Spiegelflächensegmente 16 auf den Kamerabildbereich Kb geleitet werden, sind strichpunktiert gezeichnet.

Für die strahlteilende Wirkung des adaptiven Spiegels 7 ist es vorteilhaft, wenn dieser nahe bzw. in einer Pupille des Abbildungsstrahlenganges positioniert wird. In diesem Fall kann nämlich die Spiegelfläche in gleiche Flächenanteile für die Spiegelflächensegmente 15 und 16 aufgeteilt werden. Die Ansteuerung bzw. Auslegung des adaptiven Spiegels 7 ist dann besonders einfach.

Falls der Spiegel außerhalb der Pupille (beispielsweise mehr als 10 % auf die Fokallänge bezogene Abweichung) angeordnet ist, muss man die verschachtelt liegenden Spiegelflächensegmente 15 und 16 unter Kenntnis der genauen Abbildung räumlich auf der Spiegelfläche verteilen, um einen gewünschten Strahlteilungsfaktor (beispielsweise 1:1) zu erreichen. Auch dies ist möglich, erfordert aber eine komplexere Ansteuerung bzw. Auslegung.

Weiter bewirken die Spiegelflächensegmente 15 einen Astigmatismus im erzeugten Einzelbild 12. Der adaptive Spiegel 7 ist somit so eingestellt, dass er nicht nur eine Bildteilung erzeugt, sondern auch so, dass in ein Einzelbild ein Astigmatismus eingebracht wird.

Die strahlteilende Wirkung des derart betriebenen adaptiven Spiegels 7 hat den Vorteil, dass das astigmatismusbehaftete Einzelbild 12 simultan zum astigmatismusfreien Einzelbild 13 vorliegt. Die Unterschiede in der Verzeichnung dieser Bilder sind in Fig. 3 schematisch durch Kreise bzw. Ellipsen angedeutet. Die simultane Verfügbarkeit der Einzelbilder 12 und 13 erlaubt es besonders einfach, für jeden Fluoreszenzemitter dessen Punkt-Bild-Geometrie als Ausgangspunkt für die z-Lagenbestimmung im astigmatismusbehafteten Einzelbild 12 zu nehmen.

Obige Beschreibung nimmt zur Vereinfachung an, dass der adaptive Spiegel 7 das einzige Element ist, das im Abbildungsstrahlengang 4 bewusst einen Astigmatismus einführt. Dies schließt natürlich nicht aus, dass die Abbildung aufgrund anderer optischer Effekte einen gewissen Astigmatismus hat. Möchte man diesen unterdrücken, ist die optionale Weiterbildung mit Strahlteiler 8 und Wellenfrontsensor 9 vorteilhaft, da der adaptive Spiegel dann dazu eingesetzt werden kann, einen ungewünschten "Eigen-Astigmatismus" des Abbildungsstrahlengangs 4 auszuschalten. Die Begriffe "astigmatismusfrei" sowie "astigmatismusbehaftet" beziehen sich deshalb nur auf bewusst eingeführten bzw. unterdrückten Astigmatismus, der dem Zwecke der Tiefenauflösung dient. Natürlich kann mit dem adaptiven Spiegel auch noch eine Korrektur anderer Abbildungsfehler des gesamten Abbildungssystems und gegebenenfalls der Probe vorgenommen werden. Auch dies erleichtert der Wellenfrontsensor 9.

## Patentansprüche

1. Verfahren zur hochauflösenden 3D-Fluoreszenzmikroskopie, wobei
a) in einer Probe (2) wiederholt Fluoreszenzemitter zur Abgabe von Fluoreszenzstrahlung angeregt und von der Probe (2) mit einem Mikroskop (1), das einen Abbildungsstrahlengang (4) mit einer optischen Auflösung und eine Fokalebene aufweist, Einzelbilder (10) erzeugt werden, wobei die Fluoreszenzemitter derart zur Abgabe von Fluoreszenzstrahlung angeregt werden, dass zumindest eine Teilmenge der Fluoreszenzemitter in jedem Einzelbild (10) derart isoliert ist, so dass die Bilder (11) dieser Fluoreszenzemitter im Rahmen der optische Auflösung in den Einzelbildern (10) trennbar sind,
b) in den erzeugten Einzelbildern (10) aus den Bildern der isolierten Fluoreszenzemitter die Lagen dieser Fluoreszenzemitter mit einer über eine optische Auflösung hinaus gehenden Ortsgenauigkeit lokalisiert werden und daraus ein hochaufgelöstes Gesamtbild erzeugt wird,
c) im Abbildungsstrahlengang (4) des Mikroskops (1) ein adaptiver Spiegel (7) verwendet und dieser so eingestellt wird, dass er bei der Erzeugung zumindest einiger der Einzelbilder einen Astigmatismus bewirkt, wodurch astigmatismusbehaftete Einzelbilder (12) aufgenommen werden, in denen die Bilder (11a, b) über der Fokalebene liegender Fluoreszenzemitter durch Verzerrung in eine erste Richtung eine erste Rotationsasymmetrie und die Bilder (11 d, e) unter der Fokalebene liegender Fluoreszenzemitter durch eine Verzerrung in eine zweite Richtung eine zweite Rotationsasymmetrie haben, wobei aus der Rotationsasymmetrie eine Tiefenlagenangabe für die Fluoreszenzemitter abgeleitet wird,
d) der adaptive Spiegel (7) zusätzlich auch so eingestellt wird, dass er bei der Erzeugung zumindest einiger der Einzelbilder keinen Astigmatismus bewirkt, so dass astigmatismusfreie Einzelbilder (13) aufgenommen werden, und
e) rotationsasymmetrische Bilder (14) von Fluoreszenzemittern in den astigmatismusfreien Einzelbildern (13) detektiert werden und bei der Ableitung der Tiefenlagenangabe in den astigmatismusbehafteten Einzelbilder (12) diese Fluoreszenzemitter entweder einer Tiefenlagenkorrektur unterzogen oder unterdrückt werden.

2. Verfahren nach Anspruch 1, **dadurch gekennzeichnet, dass** intermittierend zwischen Schritt c), in dem astigmatismusbehaftete Einzelbilder (12) erzeugt werden, der Schritt d), in dem astigmatismusfreie Einzelbilder (13) erzeugt werden, ausgeführt wird.

3. Verfahren nach Anspruch 2, **dadurch gekennzeichnet, dass** der adaptive Spiegel (11) so eingestellt wird, dass er simultan ein astigmatismusbehaftetes Einzelbild (12) auf einen ersten Bildaufnahmebereich (Ka) und ein astigmatismusfreies Einzelbild (13) auf einen zweiten Bildaufnahmebereich (Kb) abbildet

4. Verfahren nach einem der obigen Ansprüche, **dadurch gekennzeichnet, dass** in Schritt e) zur Tiefenlagenkorrektur bei der Ableitung der Tiefenlagenangabe die Bilder der Fluoreszenzemitter in den astigmatismusfreien Einzelbildern (13) als Ausgangspunkt zur Bestimmung der Rotationsasymmetrie verwendet werden.

5. Verfahren nach einem der obigen Ansprüche, **dadurch gekennzeichnet, dass** ein Grad der Astigmatismus, den der adaptiver Spiegel (7) bewirkt, verstellt wird, um eine Tiefenauflösung einzustellen.

6. Fluoreszenzmikroskop zum dreidimensionalen Abbilden einer Probe (2) mit einer über eine optische Auflösung gesteigerten Ortsauflösung, das aufweist:
- eine Beleuchtungseinrichtung (L1, 3, 5), die dazu ausgebildet ist, in der Probe (2) wiederholt Fluoreszenzemitter zur Abgabe von Fluoreszenzstrahlung anzuregen
- eine einen Abbildungsstrahlengang (4) mit der optischen Auflösung umfassende Abbildungseinrichtung (5, 4, K), die dazu ausgebildet ist, von der Probe (2) mit der optischen Auflösung Einzelbilder zu erzeugen,
- eine Steuereinrichtung (C), die dazu ausgebildet ist, die Beleuchtungseinrichtung (L1, 3, 5) und die Abbildungseinrichtung (5, 4, K) so anzusteuern, dass von der Probe (2) mehrere Einzelbilder erzeugt werden, wobei die Fluoreszenzemitter derart zur Abgabe von Fluoreszenzstrahlung angeregt sind, dass zumindest ein Teilmenge der Fluoreszenzemitter in jedem Einzelbild derart isoliert ist, dass die Bilder dieser Fluoreszenzemitter im Rahmen der optische Auflösung in den Einzelbildern trennbar sind, wobei
- die Steuereinrichtung (C) dazu ausgebildet ist, in den erzeugten Einzelbildern die Lagen der isoliert fluoreszierenden Fluoreszenzemitter mit einer über eine optische Auflösung hinaus gehenden Ortsgenauigkeit zu lokalisieren und daraus ein hochaufgelöstes Gesamtbild zu erzeugen,
- die Abbildungseinrichtung (5, 4, K) einen adaptiven Spiegel (7) aufweist,
- die Steuereinrichtung (C) dazu ausgebildet ist, den adaptiven Spiegel (7) so einzustellen, dass dieser bei der Erzeugung zumindest einiger der Einzelbilder einen Astigmatismus bewirkt, wodurch astigmatismusbehaftete Einzelbilder (12) aufgenommen sind, in denen die Bilder (11a, b) über der Fokalebene liegender Fluoreszenzemitter durch Verzerrung in eine erste Richtung eine erste Rotationsasymmetrie und die Bilder (11d, e) unter der Fokalebene liegender Fluoreszenzemitter durch eine Verzerrung in eine zweite Richtung eine zweite Rotationsasymmetrie haben, wobei die Steuereinrichtung (C) dazu ausgebildet ist, aus der Rotationsasymmetrie eine Tiefenlagenangabe für die Fluoreszenzemitter abzuleiten,
- die Steuereinrichtung (C) dazu ausgebildet ist, den adaptiver Spiegel (7) zusätzlich auch so einzustellen, dass dieser bei der Erzeugung zumindest einiger der Einzelbilder keinen Astigmatismus bewirkt, so dass astigmatismusfreie Einzelbilder (13) aufgenommen sind, und
- die Steuereinrichtung (C) dazu ausgebildet ist, in den astigmatismusfreien Einzelbildern (13) rotationsasymmetrische Bilder (14) von Fluoreszenzemittern zu detektieren und bei der Ableitung der Tiefenlagenangabe in den astigmatismusbehafteten Einzelbilder (12) diese Fluoreszenzemitter entweder einer Tiefenlagenkorrektur zu unterziehen oder zu unterdrücken.

7. Fluoreszenzmikroskop nach Anspruch 6, **dadurch gekennzeichnet, dass** die Steuereinrichtung (C) dazu ausgebildet ist, den adaptiven Spiegel (7) so einzustellen, dass intermittierend zwischen astigmatismusbehaftete Einzelbildern (12) astigmatismusfreie Einzelbilder (13) erzeugt sind.

8. Fluoreszenzmikroskop nach Anspruch 6, **dadurch gekennzeichnet, dass** die Abbildungseinrichtung (5, 4, K) einen ersten Bildaufnahmebereich (Ka) und einen zweiten Bildaufnahmebereich (Kb) aufweist und die Steuereinrichtung (C) dazu ausgebildet ist, den adaptiven Spiegel (7) so einzustellen, dass er simultan ein astigmatismusbehaftetes Einzelbild (12) auf den ersten Bildaufnahmebereich (Ka) und ein astigmatismusfreies Einzelbild (13) auf den zweiten Bildaufnahmebereich (Kb) abbildet.

9. Fluoreszenzmikroskop nach einem der Ansprüche 6 bis 8, **dadurch gekennzeichnet, dass** die Steuereinrichtung (C) dazu ausgebildet ist, den zur Tiefenlagenkorrektur bei der Ableitung der Tiefenlagenangabe in den astigmatismusbehafteten Einzelbildern (12) die Bilder der Fluoreszenzemitter als Ausgangspunkt zur Bestimmung der Rotationsasymmetrie verwendet.

10. Fluoreszenzmikroskop nach einem der Ansprüche 6 bis 9, **dadurch gekennzeichnet, dass** die Steuereinrichtung (C) dazu ausgebildet ist, den einen Grad der Astigmatismus, den der adaptiver Spiegel (7) bewirkt, zu verstellen, um eine Tiefenauflösung einzustellen.

## Claims

1. Method for super-resolution 3D fluorescence microscopy, wherein
a) fluorescence emitters for emitting fluorescence radiation in a sample (2) are repeatedly excited and individual images (10) are generated from the sample (2) using a microscope (1) that has an imaging beam path (4) with an optical resolution and a focal plane, wherein the fluorescence emitters are excited to emit fluorescence radiation such that at least a subset of the fluorescence emitters in each individual image (10) is isolated such that the images (11) of said fluorescence emitters are separable within the scope of the optical resolution in the individual images (10),
b) the locations of said fluorescence emitters are localized in the generated individual images (10) from the images of the isolated fluorescence emitters with a spatial accuracy that goes beyond optical resolution, and a super-resolved total image is generated therefrom,
c) an adaptive mirror (7) is used in the imaging beam path (4) of the microscope (1), which adaptive mirror is set such that it brings about astigmatism during the generation of at least some of the individual images, as a result of which astigmatism-containing individual images (12) are recorded in which the images (11a, b) of fluorescence emitters that are situated above the focal plane have a first rotational asymmetry due to distortion in a first direction, and the images (11d, e) of fluorescence emitters that are situated under the focal plane have a second rotational asymmetry due to distortion in a second direction, wherein depth location information for the fluorescence emitters is derived from the rotational asymmetry,
d) the adaptive mirror (7) is additionally set such that, during the generation of at least some of the individual images, it brings about no astigmatism such that astigmatism-free individual images (13) are recorded, and
e) rotationally asymmetric images (14) of fluorescence emitters are detected in the astigmatism-free individual images (13), and these fluorescence emitters are either subjected to depth location correction or suppressed in the derivation of the depth location information in the astigmatism-containing individual images (12).

2. Method according to Claim 1, **characterized in that** step d), in which astigmatism-free individual images (13) are generated, is carried out intermittently between step c), in which astigmatism-containing individual images (12) are generated.

3. Method according to Claim 2, **characterized in that** the adaptive mirror (11) is set such that it simultaneously images an astigmatism-containing individual image (12) onto a first image recording region (Ka) and images an astigmatism-free individual image (13) onto a second image recording region (Kb).

4. Method according to one of the preceding claims, **characterized in that**, in step e), the images of the fluorescence emitters in the astigmatism-free individual images (13) are used as a starting point to determine the rotational asymmetry in the derivation of the depth location information for the depth location correction.

5. Method according to one of the preceding claims, **characterized in that** a degree of the astigmatism, brought about by the adaptive mirror (7), is adjusted in order to set a depth resolution.

6. Fluorescence microscope for three-dimensional imaging of a sample (2) having a spatial resolution that is increased with respect to an optical resolution, having:
- an illumination device (L1, 3, 5) which is configured to repeatedly excite fluorescence emitters in the sample (2) to emit fluorescence radiation,
- an imaging device (5, 4, K) comprising an imaging beam path (4) with the optical resolution, which imaging device is configured to generate individual images of the sample (2) with the optical resolution,
- a control device (C) which is configured to actuate the illumination device (L1, 3, 5) and the imaging device (5, 4, K) such that a plurality of individual images of the sample (2) are generated, wherein the fluorescence emitters are excited to emit fluorescence radiation such that at least a subset of the fluorescence emitters in each individual image is isolated such that the images of these fluorescence emitters are separable within the scope of the optical resolution in the individual images, wherein
- the control device (C) is configured to localize in the generated individual images the locations of the isolated fluorescent fluorescence emitters with a spatial accuracy that goes beyond optical resolution and to generate therefrom a super-resolved total image,
- the imaging device (5, 4, K) has an adaptive mirror (7),
- the control device (C) is configured to set the adaptive mirror (7) such that, during generation of at least some of the individual images, it brings about astigmatism, as a result of which astigmatismcontaining individual images (12) are recorded in which the images (11a, b) of fluorescence emitters that are situated above the focal plane have a first rotational asymmetry due to distortion in a first direction, and the images (11d, e) of fluorescence emitters that are situated under the focal plane have a second rotational asymmetry due to distortion in a second direction, wherein the control device (C) is configured to derive from the rotational asymmetry depth location information for the fluorescence emitters,
- the control device (C) is configured to set the adaptive mirror (7) additionally such that, during generation of at least some of the individual images, it brings about no astigmatism, such that astigmatism-free individual images (13) are recorded, and
- the control device (C) is configured to detect rotationally asymmetric images (14) of fluorescence emitters in the astigmatism-free individual images (13), and to either subject these fluorescence emitters to depth location correction or to suppress them in the derivation of the depth location information in the astigmatism-containing individual images (12).

7. Fluorescence microscope according to Claim 6, **characterized in that** the control device (C) is configured to set the adaptive mirror (7) such that astigmatism-free individual images (13) are generated intermittently between astigmatism-containing individual images (12).

8. Fluorescence microscope according to Claim 6, **characterized in that** the imaging device (5, 4, K) has a first image recording region (Ka) and a second image recording region (Kb) and the control device (C) is configured to set the adaptive mirror (7) such that it simultaneously images an astigmatism-containing individual image (12) onto the first image recording region (Ka) and an astigmatism-free individual image (13) onto the second image recording region (Kb).

9. Fluorescence microscope according to one of Claims 6 to 8, **characterized in that** the control device (C) is configured to use the images of the fluorescence emitters as a starting point to determine the rotational asymmetry in the derivation of the depth location information in the astigmatism-containing individual images (12) for depth location correction.

10. Fluorescence microscope according to one of Claims 6 to 9, **characterized in that** the control device (C) is configured to adjust the degree of the astigmatism brought about by the adaptive mirror (7) to set a depth resolution.

## Revendications

1. Procédé de microscopie de fluorescence 3D à haute résolution, selon lequel
a) dans un échantillon (2), des émetteurs de fluorescence sont excités de manière répétitive en vue de délivrer un rayonnement fluorescent et des images individuelles (10) de l'échantillon (2) sont générées avec un microscope (1) qui possède un trajet de rayon de représentation (4) ayant une résolution optique et un plan focal, les émetteurs de fluorescence sont excités pour délivrer un rayonnement fluorescent de telle sorte qu'au moins une quantité partielle des émetteurs de fluorescence dans chaque image individuelle (10) est isolée de manière à ce que les images (11) de ces émetteurs de fluorescence puissent être séparées en les images individuelles (10) dans le cadre de la résolution optique,
b) dans les images individuelles (10) générées, les positions des émetteurs de fluorescence isolés sont localisées à partir des images de ces émetteurs de fluorescence avec une précision locale allant au-delà d'une résolution optique et une image globale à haute résolution est générée à partir de celles-ci,
c) un miroir adaptatif (7) est utilisé dans le trajet de rayon de représentation (4) du microscope (1) et celui-ci est réglé de telle sorte qu'il provoque un astigmatisme lors de la génération d'au moins quelques-unes des images individuelles, des images individuelles comportant un astigmatisme (12) étant ainsi enregistrées, dans lesquelles les images (11a, b) des émetteurs de fluorescence se trouvant au-dessus du plan focal possèdent une première asymétrie de rotation par une déformation dans une première direction et les images (11d, e) des émetteurs de fluorescence se trouvant au-dessous du plan focal possèdent une deuxième asymétrie de rotation par une déformation dans une deuxième direction, une indication de la position de profondeur étant dérivée pour les émetteurs de fluorescence à partir de l'asymétrie de rotation,
d) le miroir adaptatif (7) est également réglé de telle sorte que lors de la génération d'au moins quelques-unes des images individuelles, il ne provoque aucun astigmatisme, de sorte que des images individuelles exemptes d'astigmatisme (13) sont enregistrées, et
e) les images avec asymétrie de rotation (14) des émetteurs de fluorescence sont détectées dans les images individuelles exemptes d'astigmatisme (13) et, lors de la dérivée de l'indication de la position de profondeur dans les images individuelles comportant un astigmatisme (12), ces émetteurs de fluorescence sont soit soumis à une correction de la position de profondeur, soit supprimés.

2. Procédé selon la revendication 1, **caractérisé en ce que** l'étape d), dans laquelle sont générées des images individuelles exemptes d'astigmatisme (13), est exécutée par intermittence entre l'étape c), dans laquelle sont générées des images individuelles comportant un astigmatisme (12).

3. Procédé selon la revendication 2, **caractérisé en ce que** le miroir adaptatif (11) est réglé de telle sorte qu'il représente simultanément une image individuelle comportant un astigmatisme (12) sur une première zone d'enregistrement d'image (Ka) et une image individuelle exempte d'astigmatisme (13) sur une deuxième zone d'enregistrement d'image (Kb).

4. Procédé selon l'une des revendications précédentes, **caractérisé en ce qu'**à l'étape e), les images des émetteurs de fluorescence dans les images individuelles exemptes d'astigmatisme (13) sont utilisées en tant que point de départ pour déterminer la symétrie de rotation en vue de la correction de la position de profondeur lors de la dérivée de l'indication de la position de profondeur.

5. Procédé selon l'une des revendications précédentes, **caractérisé en ce qu'**un degré d'astigmatisme produit par le miroir adaptatif (7) est modifié pour régler une résolution en profondeur.

6. Microscope à fluorescence destiné à la représentation tridimensionnelle d'un échantillon (2) avec une précision locale rendue supérieure à une résolution optique, lequel possède :
- un dispositif d'éclairage (L1, 3, 5) qui est configuré pour exciter de manière répétitive dans l'échantillon (2) des émetteurs de fluorescence en vue de délivrer un rayonnement fluorescent
- un dispositif de représentation (5, 4, K) comprenant un trajet de rayon de représentation (4) ayant la résolution optique, lequel est configuré pour générer des images individuelles (10) de l'échantillon (2) avec la résolution optique,
- un dispositif de commande (C) qui est configuré pour commander le dispositif d'éclairage (L1, 3, 5) et le dispositif de représentation (5, 4, K) de manière à générer plusieurs images individuelles de l'échantillon (2), les émetteurs de fluorescence étant excités pour délivrer un rayonnement fluorescent de telle sorte qu'au moins une quantité partielle des émetteurs de fluorescence dans chaque image individuelle est isolée de manière à ce que les images de ces émetteurs de fluorescence puissent être séparées en les images individuelles dans le cadre de la résolution optique,
- le dispositif de commande (C) étant configuré pour localiser, dans les images individuelles générées, les positions des émetteurs de fluorescence isolés avec une précision locale allant au-delà d'une résolution optique et pour générer une image globale à haute résolution à partir de celles-ci,
- le dispositif de représentation (5, 4, K) possédant un miroir adaptatif (7),
- le dispositif de commande (C) étant configuré pour régler le miroir adaptatif (7) de telle sorte qu'il provoque un astigmatisme lors de la génération d'au moins quelques-unes des images individuelles, des images individuelles comportant un astigmatisme (12) étant ainsi enregistrées, dans lesquelles les images (11a, b) des émetteurs de fluorescence se trouvant au-dessus du plan focal possèdent une première asymétrie de rotation par une déformation dans une première direction et les images (11d, e) des émetteurs de fluorescence se trouvant au-dessous du plan focal possèdent une deuxième asymétrie de rotation par une déformation dans une deuxième direction, le dispositif de commande (C) étant configuré pour dériver une indication de la position de profondeur pour les émetteurs de fluorescence à partir de l'asymétrie de rotation,
- le dispositif de commande (C) étant configuré pour régler également le miroir adaptatif (7) en plus de telle sorte que lors de la génération d'au moins quelques-unes des images individuelles, celui-ci ne provoque aucun astigmatisme, de sorte que des images individuelles exemptes d'astigmatisme (13) sont enregistrées, et
- le dispositif de commande (C) étant configuré pour détecter les images avec asymétrie de rotation (14) des émetteurs de fluorescence dans les images individuelles exemptes d'astigmatisme (13) et, lors de la dérivée de l'indication de la position de profondeur dans les images individuelles comportant un astigmatisme (12), soit soumettre ces émetteurs de fluorescence à une correction de la position de profondeur, soit les supprimer.

7. Microscope à fluorescence selon la revendication 6, **caractérisé en ce que** le dispositif de commande (C) est configuré pour régler le miroir adaptatif (7) de telle sorte que des images individuelles exemptes d'astigmatisme (13) sont générées par intermittence entre les images individuelles comportant un astigmatisme (12).

8. Microscope à fluorescence selon la revendication 6, **caractérisé en ce que** le dispositif de représentation (5, 4, K) possède une première zone d'enregistrement d'image (Ka) et une deuxième zone d'enregistrement d'image (Kb) et le dispositif de commande (C) est configuré pour régler le miroir adaptatif (7) de telle sorte qu'il représente simultanément une image individuelle comportant un astigmatisme (12) sur la première zone d'enregistrement d'image (Ka) et une image individuelle exempte d'astigmatisme (13) sur la deuxième zone d'enregistrement d'image (Kb).

9. Microscope à fluorescence selon l'une des revendications 6 à 8, **caractérisé en ce que** le dispositif de commande (C) est configuré pour utiliser les images des émetteurs de fluorescence dans les images individuelles comportant un astigmatisme (12) en tant que point de départ pour déterminer la symétrie de rotation en vue de la correction de la position de profondeur lors de la dérivée de l'indication de la position de profondeur.

10. Microscope à fluorescence selon l'une des revendications 6 à 9, **caractérisé en ce que** le dispositif de commande (C) est configuré pour modifier un degré d'astigmatisme produit par le miroir adaptatif (7) pour régler une résolution en profondeur.
